# EUROPÄISCHE PATENTSCHRIFT

(11) **EP 3 311 087 B1**
(45) Veröffentlichungstag und Bekanntmachung des Hinweises auf die Patenterteilung: **04.09.2019**
(21) Anmeldenummer: 16725149.5
(22) Anmeldetag: 27.05.2016
(51) Int. Cl.: F25D 23/06

(54) **HAUSHALTSKÄLTEGERÄT MIT EINEM AUSSENGEHÄUSE, WELCHES EINEN INNENBEHÄLTER UMGIBT**
DOMESTIC REFRIGERATION APPLIANCE COMPRISING AN EXTERNAL HOUSING WHICH SURROUNDS AN INTERNAL CONTAINER
APPAREIL ÉLECTROMÉNAGER FRIGORIFIQUE COMPRENANT UN BOÎTIER EXTÉRIEUR QUI ENTOURE UN CONTENANT INTÉRIEUR

(30) Priorität: 18.06.2015 DE 102015211236
(43) Veröffentlichungstag der Anmeldung: 25.04.2018
(73) Patentinhaber: BSH Hausgeräte GmbH, 81739 München (DE)
(72) Erfinder: BAILLY, Frank, 89233 Neu-Ulm (DE); GÜTTINGER, Marc-Oliver, 89542 Herbrechtingen (DE); JUNG, Carsten, 89537 Giengen (DE); KLEINER, Andreas, 89160 Dornstadt (DE)
(86) Internationale Anmeldenummer: PCT/EP2016/061977
(87) Internationale Veröffentlichungsnummer: WO 2016/202554

(56) Entgegenhaltungen:
- EP-A1- 2 787 312
- JP-A- 2003 065 660
- JP-U- H 064 580
- JP-U- S5 648 628

## Beschreibung

Die Erfindung betrifft ein Haushaltskältegerät mit einem Außengehäuse, welches einen Innenbehälter umgibt. Wandungen des Innenbehälters begrenzen einen Aufnahmeraum für Lebensmittel. In einem Zwischenraum zwischen dem Außengehäuse und einer Wandung des Innenbehälters ist ein thermisch isolierendes Material angeordnet. In wenigstens einem ersten Bereich des Zwischenraums ist ein Gehäuse angeordnet, welches zur Aufnahme von Komponenten des Haushaltskältegeräts ausgebildet ist. In dem wenigstens einen ersten Bereich ist eine Dicke des thermisch isolierenden Materials geringer als in einem zweiten Bereich des Zwischenraums.

Derartige Haushaltskältegeräte sind aus dem Stand der Technik bekannt. Das thermisch isolierende Material, welches den Zwischenraum oder Hohlraum zwischen dem Außengehäuse und Wandungen des Innenbehälters ausfüllt, kann insbesondere als thermisch isolierender Schaum ausgebildet sein. In Bereichen, in welchen in dem Zwischenraum Bauteile wie das Gehäuse zur Aufnahme von Komponenten des Haushaltsgeräts angeordnet sind, lassen sich jedoch nur vergleichsweise geringe Schaumdicken realisieren. In derartigen Bereichen kommt es immer wieder zu Problemen wie dem einer Betauung oder einem Beschlagen beziehungsweise dem einer Kondenswasserbildung.

Um derartigen Problemen entgegenzuwirken, ist es aus dem Stand der Technik bekannt, in solchen Bereichen aufwändige Heizeinrichtungen vorzusehen. Beispielsweise können elektrische Leiter als Heizung eingesetzt werden, oder es können von einem heißen Kältemittel durchströmte Rohre als Heizeinrichtung zum Einsatz kommen. Ein derartiger Aufwand ist jedoch nicht wünschenswert.

Des Weiteren beschreibt die JP 2003 065660 A einen Kühlschrank, bei welchem ein Innenbehälter eine Vertiefung aufweist, in welcher ein Aufnahmegehäuse für elektrische Teile angeordnet ist. Das Aufnahmegehäuse ist zur Vibrationsisolierung von einem Polstermaterial umhüllt.

Aufgabe der vorliegenden Erfindung ist es, ein Haushaltskältegerät der eingangs genannten Art zu schaffen, bei welchem auf besonders einfache Art und Weise eine Neigung zum Beschlagen oder zur Bildung von Kondenswasser verringert ist.

Diese Aufgabe wird durch ein Haushaltskältegerät mit den Merkmalen des Patentanspruchs 1 gelöst.

Das erfindungsgemäße Haushaltskältegerät umfasst ein Außengehäuse, welches einen Innenbehälter umgibt. Wandungen des Innenbehälters begrenzen einen Aufnahmeraum für Lebensmittel. In einem Zwischenraum zwischen dem Außengehäuse und einer Wandung des Innenbehälters ist ein thermisch isolierendes Material angeordnet. In wenigstens einem ersten Bereich des Zwischenraums ist ein Gehäuse angeordnet, welches zur Aufnahme von Komponenten des Haushaltskältegeräts ausgebildet ist. In dem wenigstens einen ersten Bereich ist eine Dicke des thermisch isolierenden Materials geringer als in einem zweiten Bereich des Zwischenraums. Hierbei ist in dem wenigstens einen ersten Bereich des Zwischenraums ein hoch poröser, thermisch isolierender Festkörper benachbart zu dem Gehäuse angeordnet. Dem liegt die Erkenntnis zugrunde, dass aufgrund der Anordnung des Gehäuses in dem Zwischenraum die Dicke des thermisch isolierenden, üblicherweise durch einen Schaum bereitgestellten Materials verringert ist. Durch das Anordnen des hoch porösen, thermisch isolierenden Festkörpers in dem wenigstens einen ersten Bereich benachbart zu dem Gehäuse wird jedoch die thermische Isolationswirkung in dem wenigstens einen ersten Bereich verbessert.

Dies liegt daran, dass der Festkörper eine bessere Isolationswirkung als das in dem Zwischenraum angeordnete thermisch isolierende Material aufweist. Bei dem Festkörper besteht nämlich der Großteil des von dem Festkörper eingenommenen Volumens aus Poren. Dadurch ist dem Festkörper eine besonders hohe thermische Isolationswirkung verliehen. Die aufgrund der verringerten Dicke des als Schaum ausgebildeten thermisch isolierenden Materials verringerte thermisch isolierende Wirkung in dem Bereich des Gehäuses wird also durch das Vorsehen des Festkörpers kompensiert.

Als Dicke des thermisch isolierenden, insbesondere durch den Schaum bereitgestellten Materials ist hierbei dessen Erstreckung in Richtung eines Abstands einer Wandung des Außengehäuses von einer Wandung des Innenbehälters zu verstehen, wobei der Abstand die kürzeste Verbindung zwischen der Wandung des Außengehäuses und der Wandung des Innenbehälters ist.

Durch das Vorsehen des hoch porösen Festkörpers ist trotz der Anordnung des Gehäuses für die Komponenten des Haushaltskältegeräts in dem wenigstens einen ersten Bereich somit eine Neigung zum Beschlagen oder zur Betauung beziehungsweise zur Bildung von Kondenswasser verringert. Des Weiteren sind derartige hoch poröse Festkörper besonders flexibel einsetzbar, da sie benachbart zu unterschiedlich gestalteten, insbesondere unterschiedliche Formen und Dimensionen aufweisenden, Gehäusen in dem Zwischenraum angeordnet werden können. Insbesondere ist die durch die Verwendung des Festkörpers erreichbare Vermeidung von Betauung oder der Kondenswasserbildung also nicht abhängig von einer Größe und/oder einer Form des Gehäuses. Bei dem Haushaltskältegerät ist daher die Beschlagsneigung beziehungsweise die Neigung zur Bildung von Kondenswasser auf besonders einfache Art und Weise verringert.

In einer vorteilhaften Ausgestaltung der Erfindung sind in dem wenigstens einen ersten Bereich sowohl der Festkörper als auch das thermisch isolierende Material angeordnet. Dies ermöglicht es beispielsweise bereits bei der Herstellung des Haushaltskältegeräts den Festkörper an dem Gehäuse anzubringen und dann einen etwaig verbleibenden Hohlraum zwischen dem Festkörper und einer Wandung des Außengehäuses und/oder zwischen dem Festkörper und einer Wandung des Innenbehälters mit dem üblichen, sich von dem hoch porösen Festkörper unterscheidenden thermisch isolierenden Material zu befüllen, also beispielsweise mit dem Schaum. Dies vereinfacht die Herstellung des Haushaltskältegeräts. Des Weiteren ist hierbei durch das Aushärten des Schaums der Festkörper besonders gut in seiner Lage relativ zu dem Gehäuse fixierbar.

Als weiter vorteilhaft hat es sich gezeigt, wenn der Festkörper ein Aerogel ist. Bei solchen Aerogelen kann das Volumen zu über 99 %, beispielsweise bis zu 99,98 % aus Poren bestehen. Dadurch ist eine besonders hohe thermische Isolationswirkung bereitgestellt. Derartige Aerogele können silikatbasiert, kunststoffbasiert oder kohlenstoffbasiert sein. Des Weiteren kommen Metalloxide als Ausgangsmaterial für Aerogele in Frage. Bei den kunststoffbasierten Aerogelen eignen sich insbesondere Polymere als Ausgangsstoffe, welche eine Aerogelsynthese mittels eines Sol-Gel-Prozesses erlauben.

Die Porengröße solcher Aerogele, welche eine stark dendritische Struktur aufweisen, also eine Verästelung von Partikelketten mit sehr vielen Zwischenräumen in Form von offenen Poren, liegt insbesondere im Bereich von Nanometern. Des Weiteren ist die innere Oberfläche von solchen Aerogelen mit bis zu 1000 m²/g außergewöhnlich groß. Auch ist die Wärmeleitfähigkeit von Aerogelen bei Raumtemperatur mit Werten zwischen 0,01 W/mK bis 0,05 W/mK und einem typischen Wert von etwa 0,02 W/mK außerordentlich gering. Durch die Verwendung eines Aerogels als dem hoch porösen Festkörper kann somit selbst bei einer vergleichsweise geringen Dicke des Festkörpers eine besonders gute thermische Isolationswirkung erreicht werden.

Als weiter vorteilhaft hat es sich gezeigt, wenn der Festkörper plattenförmig ausgebildet ist. Derartige Platten eignen sich nämlich insbesondere zur Anordnung benachbart zu einer Gehäusewand des Gehäuses. Zudem lässt sich plattenförmiges Material besonders gut als Halbzeug bereitstellen.

Von besonderem Vorteil ist weiterhin, wenn der Festkörper flexibel ausgebildet ist. Dann kann sich nämlich der Festkörper gut an das Gehäuse anschmiegen, also eine Kontur des Gehäuses nachbilden. Dadurch kann besonders weitgehend vermieden werden, dass sich zwischen dem Festkörper und dem Gehäuse Hohlräume bilden, welche sich negativ auswirken, also Hohlräume, deren Vorhandensein die Isolationswirkung des Festkörpers beeinträchtigen könnte. Der Festkörper kann hierbei insbesondere als flexible Matte ausgebildet sein, da sich mit einer solchen flexiblen Matte besonders gut eine thermische Isolierung des Gehäuses gegenüber der Umgebung des Gehäuses erreichen lässt.

Von Vorteil ist es weiterhin, wenn der Festkörper an wenigstens einer Gehäusewand des Gehäuses anliegt. Dann gestaltet sich nämlich das Ausfüllen eines etwaig verbleibenden Hohlraums zwischen dem Festkörper und den Zwischenraum begrenzenden Wandungen des Außengehäuses und/oder des Innenbehälters mit einem Schaum oder dergleichen thermisch isolierenden Material als besonders einfach. Dies gilt insbesondere, wenn der Festkörper flächig an der wenigstens einen Gehäusewand des Gehäuses anliegt.

Hierbei hat sich als vorteilhaft gezeigt, wenn der Festkörper an einer Seite der Gehäusewand anliegt, welche einer Wandung des Innenbehälters zugewandt ist. Dadurch lässt sich auf besonders effiziente Weise der Neigung zur Betauung oder zur Bildung von Kondenswasser entgegenwirken, welche durch die im Betrieb des Haushaltskältegeräts im Aufnahmeraum vorliegenden niedrigen Temperaturen bedingt ist.

Als weiter vorteilhaft hat es sich gezeigt, wenn Abmessungen des Festkörpers Abmessungen einer Gehäusewand des Gehäuses entsprechen. So können beispielsweise eine Länge und eine Breite des Festkörpers auf die Länge und die Breite der Gehäusewand abgestimmt sein. Dies kann insbesondere durch Zurechtschneiden des Festkörpers auf die Größe der Gehäusewand erfolgen. Dann lässt sich nämlich besonders sicher und einfach dafür sorgen, dass der Festkörper im gesamten durch die Gehäusewand des Gehäuses eingenommenen Bereich seine Isolationswirkung entfaltet.

Der Festkörper kann insbesondere mittels eines Klebstoffs, beispielsweise mittels eines Sprühklebers, an einer Gehäusewand des Gehäuses gehalten sein. Dann braucht nämlich bei der Herstellung des Haushaltskältegeräts lediglich das bereits mit dem Festkörper bestückte Gehäuse in den Zwischenraum zwischen dem Außengehäuse und dem Innenbehälter eingebracht zu werden, und dennoch ist ein Verrutschen des Festkörpers relativ zu dem Gehäuse vermieden. Auch kann so sichergestellt werden, dass die Isolationswirkung des Festkörpers auf jeden Fall im Bereich des Gehäuses vorliegt.

Das Gehäuse kann an einer Deckenplatte des Außengehäuses gehalten sein, wobei eine Frontseite des Gehäuses mittels eines Deckels abgedeckt ist. Dann ist nämlich sichergestellt, dass zwischen dem Gehäuse und dem Innenbehälter besonders viel Bauraum für das Anordnen des hoch porösen Festkörpers zur Verfügung steht. Dadurch kann ein vergleichsweise dicker Festkörper mit einer entsprechend großen Isolationswirkung zum Einsatz kommen.

Dies gilt insbesondere, wenn gemäß einer weiteren vorteilhaften Ausgestaltung der Erfindung das Gehäuse zumindest bereichsweise an der Deckenplatte anliegt.

Schließlich hat es sich als vorteilhaft gezeigt, wenn das Gehäuse als Elektroniktasche ausgebildet ist, welche zur Aufnahme von Elektronikkomponenten des Haushaltkältegeräts ausgebildet ist. Insbesondere im Bereich einer solchen Elektroniktasche ist es nämlich von Vorteil, wenn eine Betauung oder die Bildung von Kondenswasser verhindert wird. Dann werden nämlich die in der Elektroniktasche aufgenommenen Elektronikkomponenten wie beispielsweise Steuergeräte und/oder sonstige Elektronikbauteile nicht durch Feuchtigkeit oder Kondenswasser beeinträchtigt oder geschädigt. Da in einer solchen Elektroniktasche als Komponenten des Haushaltkältegeräts oft auch Kabel, Leitungen und dergleichen und insbesondere Anschlüsse für Kabel und Leitungen vorhanden sind, wird eine solche Elektroniktasche auch als Kabeltasche bezeichnet.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: in einer Perspektivansicht ein Haushaltskältegerät mit geöffneter Tür, wobei eine unterhalb einer Deckenplatte eines Außengehäuses des Haushaltskältegeräts angeordnete Elektroniktasche frontseitig durch einen Deckel verdeckt ist;
- Fig. 2: in einer Perspektivansicht einen Bereich zwischen einer oberen Wandung eines Innebehälters des Haushaltskältegeräts und der Deckenplatte des Außengehäuses, wobei unterhalb der Deckenplatte die Elektroniktasche angeordnet ist;
- Fig. 3: eine Perspektivansicht gemäß Fig. 2, wobei an einer Unterseite der Elektroniktasche eine Aerogelmatte angebracht ist; und
- Fig. 4: eine weitere Perspektivansicht auf eine Unterseite der Deckenplatte mit der auf der Deckenplatte angeordneten Elektroniktasche, wobei die Aerogelmatte vor ihrer Anbringung an der Elektroniktasche gezeigt ist.

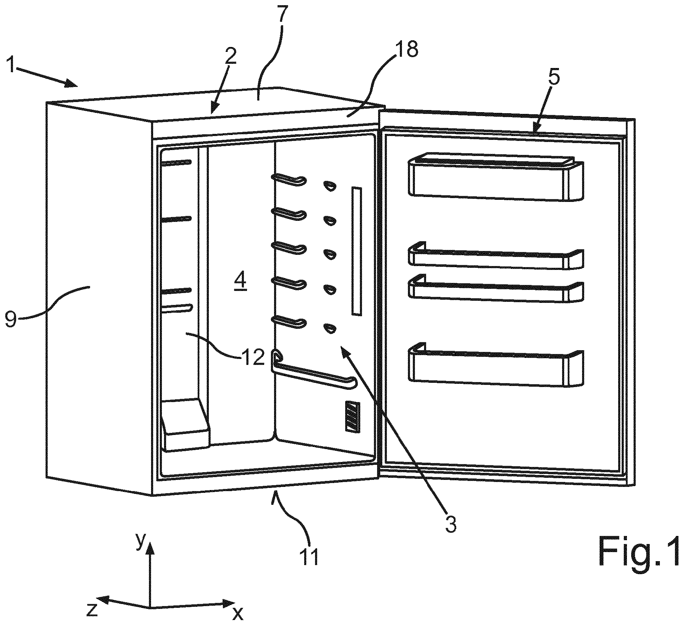

Ein in Fig. 1 gezeigtes Haushaltskältegerät 1 kann beispielsweise als Kühlgerät oder als Gefriergerät, aber auch als Kühl-Gefrier-Kombigerät ausgebildet sein.

Das Haushaltskältegerät 1 umfasst ein Außengehäuse 2, welches einen Innenbehälter 3 umgibt. Wandungen des Innenbehälters 3 begrenzen einen Aufnahmeraum 4 oder Innenraum, in welchen Lebensmittel wie Speisen und Getränke eingebracht werden können. Der Innenbehälter 3 weist frontseitig eine Beschickungsöffnung auf, welche durch eine Tür 5 verschlossen werden kann. Die Tür 5 ist in Fig. 1 in einem geöffneten Zustand gezeigt.

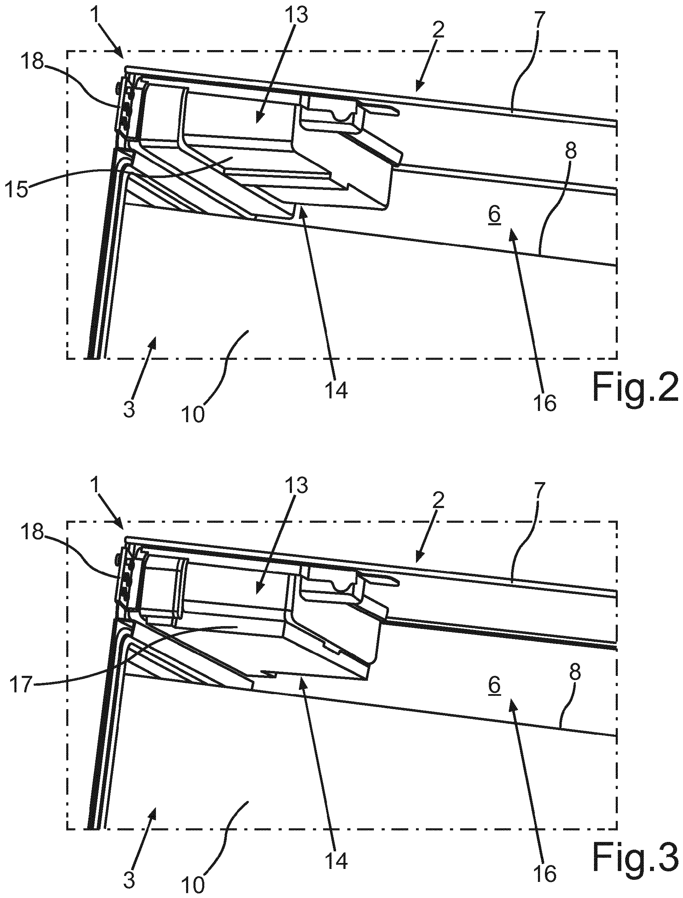

In einen Zwischenraum 6 zwischen dem Außengehäuse 2 und den Wandungen des Innenbehälters 3 (vergleiche Fig. 2) ist üblicherweise ein thermisch isolierendes Material, etwa in Form eines Schaums eingebracht. Der Innenbehälter 3 ist daher bevorzugt zu seiner in Fig. 1 linken und rechten Seite hin sowie unterseitig, oberseitig und rückseitig von dem thermisch isolierenden Schaum umgeben.

Entsprechend ist in dem Zwischenraum 6 zwischen einer Deckenplatte 7 des Außengehäuses 2 und einer oberseitigen Wandung 8 des Innenbehälters 3 der thermisch isolierende Schaum vorhanden. Aus Gründen der Übersichtlichkeit ist allerdings in Fig. 2 und in Fig. 3 der in dem Zwischenraum 6 vorhandene Schaum nicht dargestellt. In analoger Weise ist der Raum zwischen Seitenwänden 9 des Außengehäuses 2 (vergleiche Fig. 1) und seitlichen Wandungen 10 des Innenbehälters 3 (vergleiche Fig. 2) mit dem Schaum verfüllt. Dasselbe gilt für den Zwischenraum zwischen einem Boden 11 des Außengehäuses (vergleiche Fig. 1) und einer bodenseitigen Wandung des Innenbehälters 3 sowie für den Zwischenraum zwischen einer (nicht gezeigten) Rückwand des Außengehäuses 2 und einer rückwärtigen Wandung 12 des Innenbehälters 3 (vergleiche Fig. 1).

Die Deckenplatte 7 des Haushaltskältegeräts 1 kann auch als Toppanel bezeichnet werden, wobei die Deckenplatte 7 insbesondere aus einem Blech gebildet sein kann. In einem Bereich des zwischen dem Außengehäuse 2 und dem Innenbehälter 3 vorhandenen Zwischenraums 6, und zwar vorliegend unterhalb der Deckenplatte 7 des Außengehäuses 2, ist ein Gehäuse für Komponenten des Haushaltskältegeräts 1 angeordnet, welches bei dem gezeigten Ausführungsbeispiel als eine sogenannte Elektroniktasche 13 oder Kabeltasche ausgebildet ist (vergleiche Fig. 2). Die Elektroniktasche 13 kann insbesondere aus einem Kunststoff gefertigt sein.

Des Weiteren kann in alternativen Ausführungsformen die Elektroniktasche 13 und/oder ein weiteres derartiges Bauteil mit einem Gehäuse zur Aufnahme von Komponenten des Haushaltskältegeräts 1 an anderen Stellen des Zwischenraums 6 zwischen dem Außengehäuse 2 und dem Innenbehälter 3 angeordnet sein.

Bei dem Haushaltskältegerät 1 gibt eine x-Achse eines in Fig. 1 gezeigten rechtwinkligen Koordinatensystems eine Breite, eine z-Achse des rechtwinkligen Koordinatensystems eine Tiefe und eine y-Achse eine Hochrichtung des Haushaltskältegeräts 1 an. Entsprechend sind die Deckenplatte 7 und die oberseitige Wandung 8 des Innenbehälters 3 parallel zu einer x-z-Ebene ausgerichtet. Die in der Hochrichtung des Haushaltskältegeräts 1 unterhalb der Deckenplatte 7 angeordnete Elektroniktasche 13 dient insbesondere zur Aufnahme von Elektronikkomponenten wie Sensoren und/oder Steuergeräten und dergleichen. Beispielsweise kann in der Elektroniktasche 13 ein Sensor angeordnet sein, mittels welchem sich feststellen lässt, ob die Tür 5 geöffnet oder geschlossen ist, also ein sogenannter Türsensor.

In einem Bereich 14 zwischen einer unterseitigen Gehäusewand 15 der Elektroniktasche 13 und der oberen Wandung 8 des Innenbehälters 3 ist aufgrund der Anordnung der Elektroniktasche 13 der für den thermisch isolierenden Schaum verfügbare Raum gegenüber einem an diesen Bereich 14 angrenzenden, zweiten Bereich 16 des Zwischenraums 6 verringert. In diesem zweiten Bereich 16 des Zwischenraums 6 befindet sich nämlich keine Elektroniktasche 13 oder ein derartiges Bauteil zwischen der Deckenplatte 7 und der oberen Wandung 8 des Innenbehälters 3.

Wenn der übrige Zwischenraum 6 vollständig mit dem thermisch isolierenden Schaum ausgefüllt ist, so ist in dem die Elektroniktasche 13 aufweisenden Bereich 14 des Zwischenraums 6 aufgrund der verringerten Schaumdicke eine geringere thermische Isolationswirkung des Schaums vorhanden. Um zu verhindern, dass es infolgedessen zu Problemen wie einer Betauung, also einem Beschlagen, oder einer Kondenswasserbildung in dem Bereich 14 kommt, ist vorliegend an der Gehäusewand 15 der Elektroniktasche 13 ein hoch poröser Festkörper angeordnet, welcher insbesondere als Aerogelmatte 17 ausgebildet sein kann (vergleiche Fig. 3).

Die Aeorgelmatte 17 ist vorzugsweise weich und flexibel ausgebildet, sodass sie sich besonders gut an die Kontur der Elektroniktasche 13 anschmiegen kann. Des Weiteren weist die Aerogelmatte 17 eine bessere thermische Isolationswirkung auf als der sich in dem Bereich 14 zwischen der Aerogelmatte 17 und der oberen Wandung 8 des Innenbehälters 3 befindende Schaum. Durch die weiche, flexible Ausbildung der Aerogelmatte 17 lässt sich die Aerogelmatte 17 trotz der im Bereich 14 vorliegenden, beengten Platzverhältnisse gut unterbringen. Außerdem kann die Aerogelmatte 17 aufgrund ihrer Flexibilität flächig mit der Gehäusewand 15 in Anlage gebracht werden, selbst wenn die Gehäusewand 15, wie vorliegend beispielhaft gezeigt, uneben ausgebildet ist, also Stufen, Vorsprünge, Rippen oder dergleichen aufweist. Daher ist die Aeorgelmatte 17 zum Isolieren auch besser geeignet als ein Vakuum-Isolationspanel, welches sich eben nicht an die Kontur der Elektroniktasche 13 anpassen lässt.

Beim Fertigen des Haushaltskältegeräts kann die Aerogelmatte 17 zunächst auf die benötigte Größe zurechtgeschnitten werden, sodass Abmessungen der Aerogelmatte 17 den Abmessungen der Gehäusewand 15 insbesondere in Richtung der Breite (in Richtung der x-Achse) und der Tiefe (in Richtung der z-Achse) entsprechen.

Zum Anbringen der Aerogelmatte 17 an der Gehäusewand 15 kann ein Klebstoff zum Einsatz kommen, etwa ein Sprühkleber, welcher auf die Aerogelmatte 17 und/oder auf die Gehäusewand 15 aufgesprüht werden kann. Mittels einer Anpressvorrichtung, welche bevorzugt einen weichen Anpresstempel aufweist, kann dann die Aerogelmatte 17 gegen die Elektroniktasche 13 oder ein derartiges, zu isolierendes Bauteil gedrückt werden. Aufgrund des weichen Anpressstempels und der Flexibilität der Aerogelmatte 17 wird eine besonders gute flächige Anlage der Aerogelmatte 17 an der Gehäusewand 15 erreicht.

Durch diese Art der Anbringung der Aerogelmatte 17 an der Elektroniktasche 13 treten keine sich im Hinblick auf die Isolationswirkung negativ auswirkenden Hohlräume auf der dem Isolationsschaum zugewandten Seite der Elektroniktasche 13 auf. Aufgrund des Zusammenwirkens des in dem Bereich 14 vorhandenen isolierenden Schaummaterials und der Aerogelmatte 17 kann eine besonders gute thermische Isolation der Elektroniktasche 13 gegenüber dem Innenbehälter 3 erreicht werden. Dadurch werden eine Betauung und/oder eine Kondenswasserbildung verhindert oder zumindest wesentlich verringert.

Aus Fig. 1 ist des Weiteren ersichtlich, dass die Elektroniktasche 13 zu einer Frontseite des Haushaltskältegeräts 1 hin mittels eines Deckels 18 verdeckt ist. Im montierten Zustand grenzt die Elektroniktasche 13 an den Deckel 18 an (vergleiche Fig. 2). Des Weiteren liegt die Elektroniktasche 13 auch an der Deckenplatte 7 des Außengehäuses 2 an.

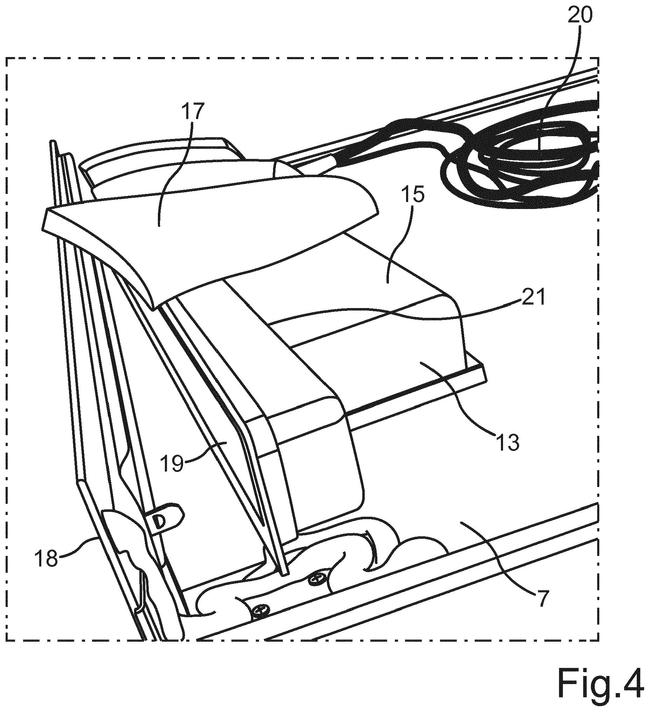

In Fig. 4 ist die Deckenplatte 7 von ihrer Unterseite her gezeigt, also von ihrer bei dem Haushaltskältegerät 1 gemäß Fig. 1 der oberen Wandung 8 des Innenbehälters 3 zugewandten Seite her. Insbesondere aus Fig. 4, welche die Elektroniktasche 13 vor deren Montage an die Deckenplatte 7 zeigt, ist ersichtlich, dass in der Elektroniktasche 13 ein Aufnahmeraum 19 für elektronische Komponenten, Sensoren wie den Türsensor, Kabel und dergleichen bereitgestellt ist. Des Weiteren sind in Fig. 4 zu der Elektroniktasche hin verlaufende Kabel 20 oder Leitungen gezeigt. Die Elektroniktasche 13 wird daher auch als Kabeltasche bezeichnet.

Die Aerogelmatte 17 ist in dem in Fig. 4 veranschaulichten Produktionsstadium des Haushaltskältegeräts 1 noch nicht auf die (im Einbauzustand der Elektroniktasche 13 unterseitige) Gehäusewand 15 der Elektroniktasche 13 aufgeklebt gezeigt. Jedoch geht aus der Fig. 4 besonders gut hervor, dass im Bereich der Gehäusewand 15 der Elektroniktasche 13 eine Stufe 21 oder dergleichen Unebenheiten vorhanden sein können. An diese Unebenheiten lässt sich die flexible Aerogelmatte 17 derart anpassen, dass jeder Bereich der Gehäusewand 15 mit einer gleich dicken Lage des Aerogelmaterials der Aerogelmatte 17 versehen und somit thermisch isoliert ist.

### Bezugszeichenliste

- 1: Haushaltskältegerät
- 2: Außengehäuse
- 3: Innenbehälter
- 4: Aufnahmeraum
- 5: Tür
- 6: Zwischenraum
- 7: Deckenplatte
- 8: Wandung
- 9: Seitenwand
- 10: Wandung
- 11: Boden
- 12: Wandung
- 13: Elektroniktasche
- 14: Bereich
- 15: Gehäusewand
- 16: Bereich
- 17: Aerogel matte
- 18: Deckel
- 19: Aufnahmeraum
- 20: Kabel
- 21: Stufe

## Patentansprüche

1. Haushaltskältegerät (1) mit einem Außengehäuse (2), welches einen Innenbehälter (3) umgibt, wobei Wandungen (8, 10, 12) des Innenbehälters (3) einen Aufnahmeraum (4) für Lebensmittel begrenzen, wobei in einem Zwischenraum (6) zwischen dem Außengehäuse (2) und einer Wandung (8) des Innenbehälters (3) ein thermisch isolierendes Material angeordnet ist, und wobei in wenigstens einem ersten Bereich (14) des Zwischenraums (6) ein Gehäuse (13) zur Aufnahme von Komponenten des Haushaltskältegeräts (1) angeordnet ist, wobei eine Dicke des thermisch isolierenden Materials in dem wenigstens einen ersten Bereich (14) geringer ist als in einem zweiten Bereich (16) des Zwischenraums (6), **dadurch gekennzeichnet, dass** in dem wenigstens einen ersten Bereich (14) des Zwischenraums (6) ein hoch poröser, thermisch isolierender Festkörper (17) benachbart zum Gehäuse (13) angeordnet ist, welcher eine bessere thermische Isolationswirkung als das in dem Zwischenraum (6) angeordnete thermisch isolierende Material aufweist.

2. Haushaltskältegerät nach Anspruch 1, **dadurch gekennzeichnet, dass** in dem wenigstens einen ersten Bereich (14) sowohl der Festkörper (17) als auch das thermisch isolierende Material angeordnet sind.

3. Haushaltskältegerät nach Anspruch 1 oder 2, **dadurch gekennzeichnet, dass** der Festkörper (17) ein Aerogel ist.

4. Haushaltskältegerät nach einem der Ansprüche 1 bis 3, **dadurch gekennzeichnet, dass** der Festkörper (17) plattenförmig ausgebildet ist.

5. Haushaltskältegerät nach einem der Ansprüche 1 bis 4, **dadurch gekennzeichnet, dass** der Festkörper (17) flexibel, insbesondere als flexible Matte, ausgebildet ist.

6. Haushaltskältegerät nach einem der Ansprüche 1 bis 5, **dadurch gekennzeichnet, dass** der Festkörper (17), insbesondere flächig, an wenigstens einer Gehäusewand (15) des Gehäuses (13) anliegt.

7. Haushaltskältegerät nach Anspruch 6, **dadurch gekennzeichnet, dass** der Festkörper (17) an einer Seite der Gehäusewand (15) anliegt, welche einer Wandung (8) des Innenbehälters (3) zugewandt ist.

8. Haushaltskältegerät nach einem der Ansprüche 1 bis 7, **dadurch gekennzeichnet, dass** Abmessungen des Festkörpers (17) Abmessungen einer Gehäusewand (15) des Gehäuses (13) entsprechen.

9. Haushaltskältegerät nach einem der Ansprüche 1 bis 8, **dadurch gekennzeichnet, dass** der Festkörper (17) mittels eines Klebstoffs an einer Gehäusewand (15) des Gehäuses (13) gehalten ist.

10. Haushaltskältegerät nach einem der Ansprüche 1 bis 9, **dadurch gekennzeichnet, dass** das Gehäuse (13) an einer Deckenplatte (7) des Außengehäuses (2) gehalten ist, wobei eine Frontseite des Gehäuses (13) mittels eines Deckels (18) abgedeckt ist.

11. Haushaltskältegerät nach Anspruch 10, **dadurch gekennzeichnet, dass** das Gehäuse (13) zumindest bereichsweise an der Deckenplatte (7) anliegt.

12. Haushaltskältegerät nach einem der Ansprüche 1 bis 11, **dadurch gekennzeichnet, dass** das Gehäuse als Elektroniktasche (13) ausgebildet ist, welche zur Aufnahme von Elektronikkomponenten des Haushaltskältegeräts (1) ausgebildet ist.

## Claims

1. Household refrigerator (1) having an outer housing (2) which surrounds an inner container (3), wherein walls (8, 10, 12) of the inner container (3) delimit a receiving space (4) for food, wherein a thermally insulating material is arranged in an intermediate space (6) between the outer housing (2) and a wall (8) of the inner container (3), and wherein in at least one first region (14) of the intermediate space (6) a housing (13) for receiving components of the household refrigerator (1) is arranged, wherein a thickness of the thermally insulating material is less in the at least one first region (14) than in a second region (16) of the intermediate space (6), **characterised in that** in the at least one first region (14) of the intermediate space (6) a highly porous, thermally insulating solid body (17) is arranged adjacent to the housing (13) and has a better thermal insulation effect than the thermally insulating material arranged in the intermediate space (6).

2. Household refrigerator according to claim 1, **characterised in that** both the solid body (17) and the thermally insulating material are arranged in the at least one first region (14).

3. Household refrigerator according to claim 1 or 2, **characterised in that** the solid body (17) is an aerogel.

4. Household refrigerator according to one of claims 1 to 3, **characterised in that** the solid body (17) is embodied as plate-shaped.

5. Household refrigerator according to one of claims 1 to 4, **characterised in that** the solid body (17) is embodied as flexible, in particular as a flexible mat.

6. Household refrigerator according to one of claims 1 to 5, **characterised in that** the solid body (17), abuts, in particular flat, against at least one housing wall (15) of the housing (13).

7. Household refrigerator according to claim 6, **characterised in that** the solid body (17) abuts against one side of the housing wall (15) which faces a wall (8) of the inner container (3).

8. Household refrigerator according to one of claims 1 to 7, **characterised in that** dimensions of the solid body (17) correspond to dimensions of a housing wall (15) of the housing (13).

9. Household refrigerator according to one of claims 1 to 8, **characterised in that** the solid body (17) is held on a housing wall (15) of the housing (13) by means of an adhesive.

10. Household refrigerator according to one of claims 1 to 9, **characterised in that** the housing (13) is held on a ceiling panel (7) of the outer housing (2), wherein a front side of the housing (13) is covered by means of a lid (18).

11. Household refrigerator according to claim 10, **characterised in that** the housing (13) abuts at least partially against the ceiling panel (7).

12. Household refrigerator according to one of claims 1 to 11, **characterised in that** the housing is designed as an electronics bag (13) which is designed to receive electronic components of the household refrigerator (1).

## Revendications

1. Appareil frigorifique ménager (1), muni d'une enveloppe extérieure (2) entourant un réceptacle intérieur (3), dans lequel des parois (8, 10, 12) du réceptacle intérieur (3) délimitent un espace d'accueil (4) destiné à des produits alimentaires, dans lequel un matériau thermiquement isolant est agencé dans un espace libre (6) entre l'enveloppe extérieure (2) et une paroi (8) du réceptacle intérieur (3), et dans lequel un boîtier (13) destiné à accueillir des composants de l'appareil frigorifique ménager (1) est agencé dans au moins une première région (14) de l'espace libre (6), dans lequel une épaisseur du matériau thermiquement isolant est plus faible dans la au moins une première région (14) que dans une deuxième région (16) de l'espace libre (6), **caractérisé en ce qu'**un corps solide (17) thermiquement isolant et fortement poreux est agencé au voisinage du boîtier (13) dans la au moins une première région (14) de l'espace libre (6), ledit corps présentant une action thermiquement isolante supérieure à celle du matériau thermiquement isolant agencé dans l'espace libre (6).

2. Appareil frigorifique ménager selon la revendication 1, **caractérisé en ce que** le corps solide (17) ainsi que le matériau thermiquement isolant sont agencés dans la au moins une première région (14).

3. Appareil frigorifique ménager selon la revendication 1 ou 2, **caractérisé en ce que** le corps solide (17) est un aérogel.

4. Appareil frigorifique ménager selon l'une quelconque des revendications 1 à 3, **caractérisé en ce que** le corps solide (17) est réalisé sous forme de plaque.

5. Appareil frigorifique ménager selon l'une quelconque des revendications 1 à 4, **caractérisé en ce que** le corps solide (17) est réalisé flexible, en particulier sous forme de natte flexible.

6. Appareil frigorifique ménager selon l'une quelconque des revendications 1 à 5, **caractérisé en ce que** le corps solide (17) est en contact, en particulier à plat, avec au moins une paroi de boîtier (15) du boîtier (13).

7. Appareil frigorifique ménager selon la revendication 6, **caractérisé en ce que** le corps solide (17) est en contact avec un côté de la paroi de boîtier (15) qui est tourné vers une paroi (8) du réceptacle intérieur (3).

8. Appareil frigorifique ménager selon l'une quelconque des revendications 1 à 7, **caractérisé en ce que** les dimensions du corps solide (17) correspondent aux dimensions d'une paroi de boîtier (15) du boîtier (13).

9. Appareil frigorifique ménager selon l'une quelconque des revendications 1 à 8, **caractérisé en ce que** le corps solide (17) est retenu au niveau d'une paroi de boîtier (15) du boîtier (13) au moyen d'une colle.

10. Appareil frigorifique ménager selon l'une quelconque des revendications 1 à 9, **caractérisé en ce que** le boîtier (13) est retenu au niveau d'une plaque de dessus (7) de l'enveloppe extérieure (2), dans lequel un côté avant du boîtier (13) est masqué au moyen d'un bouchon (18).

11. Appareil frigorifique ménager selon la revendication 10, **caractérisé en ce que** le boîtier (13) est au moins localement en contact avec la plaque de dessus (7).

12. Appareil frigorifique ménager selon l'une quelconque des revendications 1 à 11, **caractérisé en ce que** le boîtier est réalisé sous forme de casier électronique (13) destiné à accueillir des composants électroniques de l'appareil frigorifique ménager (1).
